# EUROPEAN PATENT APPLICATION

(11) **EP 2 837 495 A1**
(43) Date of publication of application: **18.02.2015**
(21) Application number: 14180743.8
(22) Date of filing: 13.08.2014
(51) Int. Cl.: B32B 7/00, B32B 7/12, B32B 21/02, B32B 21/04, B32B 21/13

(54) **Composite engineered floor board having an oriented strand board (osb) stabilizing base**

(30) Priority: 14.08.2013 US 201313966363
(71) Applicant: Boa-Franc, G.p., Saint-Georges, QC G5Y 8J5 (CA)
(72) Inventor: Roy, François, Saint-Georges QC G5Z 0Y2 (CA); Tanguay, Vincent, Lac-Etchemin QC G0R 1S0 (CA)
(74) Representative: Delorme, Nicolas

(57) **Abstract**

An engineered floor board or wood panel for the fabrication thereof is comprised of a thin top wood layer fabricated from a quality wood material. The top wood layer is glued to a core layer wood product having a grain orientation disposed transverse to the longitudinal axis of the top wood layer. A base wood layer is fabricated from oriented strand board (OSB) which is glued to the bottom of the core layer. The base wood layer is fabricated from a single sheet having wood particles and fibers oriented in at least two layers with at least a top layer having its wood particles and fibers generally oriented along the longitudinal axis of the top wood layer and transverse to use core layer to substantially prevent displacement and deformation of the core layer caused by expansion and retraction thereof and thereby preventing deformations in the top wood layer.

## Description

### TECHNICAL FIELD

The present invention relates to a composite engineered floor board having an oriented strand board (OSB) stabilizing base.

### BACKGROUND OF THE INVENTION

Engineered wood floors are generally comprised of a thin quality top wood layer which is glued to a substrate layer generally known as a core. The substrate layer is fabricated from an inferior wood product and it has its grain generally oriented transverse to the longitudinal axis of the top wood layer to prevent cupping or crowning and longitudinal distortion in the top wood layer. However, because the core material is fabricated from unstable wood material it is also subject to expansion and retraction and distortion. Such displacement in the core material is generally transmitted to the top surface of the thin top wood layer and produces distortions therein which are visible to the eye, particularly when viewed under light, and this is known as telegraphy. Telegraphy is due to distortion of the core material or the spacing dimensions between slats when the core material is fabricated from a plurality of slats which are disposed in side-by-side relationship. Because the slats are also fabricated from inferior wood material each slat may react differently from the other slats depending on the quality of the wood material of the slats. For example, one slat may be have a knot therein and this causes distortion of the slats as well as displacement thereof making the spaces between the slats irregular. It is therefore desirable to stabilize the wood core material to prevent this distortion.

In order to alleviate the effect of telegraphy in the top wood layer, the top wood layer is maintained fairly thick. It is desirable to have a thin top wood layer to thereby reduce the costs of these engineered floor boards. It is also known to glue the top wood layers directly on plywood material, such as European birch Plywood having a thickness of 15 to 16 mm to provide stability of the top wood layer. However, such core material is expensive and still provides distortion as the plywood sheet has defects depending on the quality of its laminated wood sheets.

Engineered floor boards currently manufactured are comprised of a quality top wood layer which is glued to a substrate which is comprised of slats of inferior wood material which are glued under the top wood layer and which extend transverse to the longitudinal axis of the top wood layer to prevent cupping and crowning of the top wood layer while providing excellent flexibility along the longitudinal axis of the floor board. Theses floor boards are usually secured to a prepared sub floor which may be formed of concrete or plywood material and when secured thereto by nails or glue the sub floor provides stability of the slats. However, there is often a long time laps between the fabrication of the engineered floor boards and their use i.e. their securement to a prepared sub floor. During that time period, the floor boards are shipped under different climatic conditions and also stored under different climatic conditions and the substrate is subjected to expansion and retraction often resulting in distortion of the floor boards and when finally ready to be installed a deformation is already present in the top wood layer. It is therefore desirable to stabilize the core layer during the manufacturing process. It is also desirable to stabilize the core layer with a base material which has the required properties to prevent the distortion as above-mentioned. Further, it is desirable that the base layer be fabricated as thins as possible wherein the engineered floor board can be fabricated as thin as possible and preferably in the range of from 10 mm to 25 mm and permit the reduction in the thickness of the top wood layer which uses a more expensive wood material. It is also desirable that the core and base materials have a strength to support the formation of a tongue and groove profile or a lap joint profile.

To reduce cost in the manufacturing process it is also desirable to glue a single core stabilizing wood base layer under the core layer whereby the top wood layer and base layer can be glued to the core layer simultaneously. This would permit minimum modifications to existing floor board assembly lines. The base layer should also have fiber oriented characteristics to counteract stress in the core layer caused by expansion and retraction.

### SUMMARY OF THE INVENTION

It is therefore a feature of the present invention to provide an engineered floor board or a wood panel for the construction of same and which substantially overcomes the above-mentioned disadvantages of the prior art and provides the above desired needs.

According to the above feature, from a broad aspect, the present invention provides an engineered floor board comprised of a thin top wood layer having a longitudinal axis. The top wood layer is fabricated from a quality wood piece. The top wood layer is glued to a core layer wood product having a flexion strength axis disposed transversely to the longitudinal axis of the top wood layer. The core layer resists to distortion of the floor board. A base wood layer is glued to a bottom surface of the core layer. The base wood layer is fabricated from oriented strand board (OSB) composed of wood strands generally oriented in at least two layers with a top one of the layers having its strands oriented along the longitudinal axis of the top wood layer to substantially prevent displacement and deformation of the core layer to prevent telegraphy in a top surface of the top wood layer caused by deformation in the core layer.

In one particular embodiment of the present invention, the core layer of the engineered floor board as described above is constituted by a plurality of rectangular wood slats disposed in side-by-side relationship and extending transverse to the longitudinal axis of the top wood layer.

In another particular embodiment of the present invention, the engineered floor board as described above further includes a base wood layer having a thickness which is substantially equal to the thickness of the core layer.

In another particular embodiment of the present invention, the engineered floor board as described above includes an oriented strand board having two or more layers of wood strands, each layer having its strands oriented along a different axis to adjacent layers to provide planar stability of the oriented strand board, and wherein the layers of wood strands are preferably oriented substantially transverse to an adjacent layer.

In another particular embodiment of the present invention, the engineered floor board as described above includes a thickness that is in the range of from 10 mm to 25 mm, and wherein the thickness of the engineered floor board is preferably composed of the combination of the following layer thickness: a top layer in the range of 2 to 6 mm, a core layer in the range of 4 to 12 mm, and a base wood layer in the range of 6 to 12 mm.

In another particular embodiment of the present invention, the engineered floor board as described above includes rectangular wood slats which are disposed in side-by-side spaced relationship thereby defining grooves therebetween.

In another particular embodiment of the present invention, the engineered floor board as described above includes a base wood layer having an internal bond strength of at least 50 to 60 p.s.i. to prevent the displacement and deformation of the core layer caused by expansion and retraction thereof and thereby resisting to longitudinal deformation, cupping and crowning of the engineered floor board to substantially reduce telegraphy.

In another particular embodiment of the present invention, the engineered floor board as described above includes a base wood layer is a three layer oriented strand board (OSB), each layer being composed of wood strands oriented in a generally common direction and glued together under compression, a top layer of the OSB having its strands oriented parallel to the longitudinal axis of the top wood layer, an intermediate layer of the OSB having its strands oriented transverse to the top layer thereof, and a bottom layer of the OSB having its strands oriented parallel to the top layer of the OSB.

In another particular embodiment of the present invention, the engineered floor board as described above includes layers of the OSB having a thickness ratio composed of at least one of the following: 30% top layer, 40% intermediate layer and 30% bottom layer; 40% top layer, 20% intermediate layer and 40% bottom layer; or 20% top layer, 60% intermediate layer and 20% bottom layer.

In another particular embodiment of the present invention, the engineered floor board as described above is formed with one of tongue and groove edge profile, and lap connecting edge profile.

According to a further broad aspect of the present invention, there is provided a wood panel for the fabrication of engineered floor boards. The panel comprises a top sheet fabricated from a quality wood material. The top sheet is glued to a core wood sheet having a flexion strength and is disposed transversely to a longitudinal axis of the top sheet. The core wood sheet resists to distortion of the wood panel. A base wood sheet is glued to a bottom surface of the core wood sheet. The base wood sheet is fabricated from oriented strand board (OSB) composed of wood strands generally oriented in at least two layers with a top one of the layers having its wood strands oriented along the longitudinal axis of the top sheet to substantially prevent displacement and deformation of the core sheet to prevent telegraphy in a top surface of the top sheet caused by deformation in the core sheet.

In one particular embodiment of the present invention, the wood panel as described above is constituted by a plurality of rectangular wood slats disposed in side-by-side relationship and extending transverse to the longitudinal axis of the top sheet.

In another particular embodiment of the present invention, the wood panel as described above includes a base wood sheet having a thickness which is substantially equal to the thickness of the core layer.

In another particular embodiment of the present invention, the wood panel as described above includes an oriented strand board having two or more layers of wood strands, each layer having its strands oriented along a different axis to adjacent layers to provide planar stability of the oriented strand board, and wherein the layers of wood strands are preferably orientied substantially transverse to an adjacent layer.

In another particular embodiment of the present invention, the wood panel as described above includes a base wood layer has an internal bond strength of at least 50 to 60 p.s.i. to prevent the displacement and deformation of the core layer caused by expansion and retraction thereof and thereby resisting to longitudinal deformation, cupping and crowning of the engineered floor board.

### DESCRIPTION OF THE DRAWINGS

The preferred embodiment of the present invention will now be described with reference to the accompanying drawings, in which:
Figure 1 is an exploded perspective view of an engineered floor board constructed in accordance with the present invention;
Fig. 2 is a further exploded perspective view showing the engineered floor board of the present invention constructed with a different core layer than Figure 1;
Fig. 3 is a cross-sectional end view illustrating the formation of lap joint locking system routed in the contour edges of the engineered floor board;
Fig. 4 is a view similar to Figure 3 but illustrating a tongue and groove joint locking system; and
Fig. 5 is a fragmented perspective view illustrating a portion of a wood panel for the fabrication of the engineered floor board as illustrated in Figure 1.

### DETAILED DESCRIPTION OF THE PREFERRED EMBODIMENTS

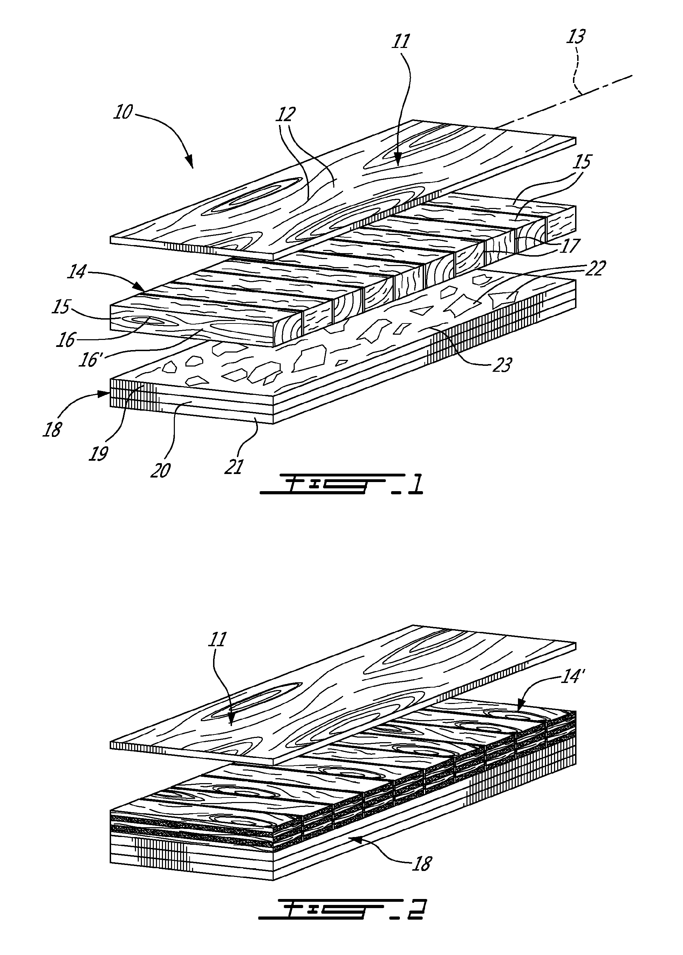

Referring to the drawings and more particularly to Figures 1 and 2 there is shown generally at 10 the engineered floor board of the present invention and comprised of a thin top wood layer 11 fabricated from a quality wood material such as oak, maple or many other quality wood product as is wellknown to a person skilled in the art. Preferably, the top wood layer 11 has its wood grain 12 oriented along the longitudinal axis 13 of the top wood layer 11 or the floor board 10.

The top wood layer 11 is glued to a core layer 14 which is shown in Figure 1 as constituted by a plurality of rectangular wood slats 15 disposed in side-by-side relationship and extending transverse to the longitudinal axis 13 of the top wood layer 11. The core layer 14 is fabricated from an inferior wood product such as spruce material which is a resinous material and which may contain imperfections 16 therein. The wood slats 15 may be disposed in abutting relationship or in space relationship as herein shown wherein grooves 17 are formed between the wood slats 15. These wood slats in a two-ply engineered wood board provide excellent flexibility of the engineered floor board 10 along its longitudinal axis 13 whereby to provide ease of installation of the floor board on a sub floor which has undulations therein. The transverse disposition of the wood slats orient its grain 16' and flexion strength axis transverse to the longitudinal axis 13 of the top wood layer 11 to substantially counteract the effects of cupping or crowning in the top wood layer.

As shown in Figure 1 the engineered floor board of the present invention further comprises a base wood layer 18 which is formed from a single sheet of oriented strand board material (OSB) which is comprised of at least 2 layers of wood particles strands bonded together with the layers generally oriented transverse to one another. OSB sheets are generally used in the construction of buildings for roof sheeting, wall and floor sheeting and have a thickness of about - 5/8 inches to 3/4 inches. As herein shown the oriented strand board base wood layer 18 is formed of three distinct layers namely a top layer 19, an intermediate layer 20 and a bottom layer 21. The top layer 19 and bottom layer 21 are known as outer layers. The oriented strand board 18 has an internal bond strength of at least 50 to 60 p.s.i. and thus provides excellent planar stability of the board preventing its distortion and ensuring structural strength to stress. The wood particles in each layer which form this oriented strand board 18 are comprised of wood strands 22 of different sizes and fines particles 23 and the strands are oriented generally along a common axis. The OSB base layer 18 as herein illustrated as its top layer 19 with its strands oriented along an axis parallel to the longitudinal axis 13 of the top wood layer and therefore transverse to the wood slats. The top wood layer 11 is further stabilized by the intermediate layer 20 having its wood strands oriented transverse to the top wood layer. The bottom layer 21 further provides stability by having its wood strands oriented parallel to the longitudinal axis of the top layer and transverse to those of the intermediate layer 20. The OSB board layers and their strands and fines are glued to one another in an intermingled fashion under pressure. The base layer 18 fabricated from such an OSB board provides excellent retention and stability of the wood slats which are subject to expansion and retraction, while being retained captive under the top layer 19. The OSB base layer further reduces flexion of the floor board along its longitudinal axis and thereby reducing the board to bow longitudinally (this is known as banana effect). Accordingly, the OSB base layer substantially prevents distortion of the wood board to substantially reduce the effect of telegraphy into the top wood layer 11, particularly when the top wood layer 11 is made from very thin quality wood material and having a reflective finish coating, and also reducing bowing longitudinally (banana effect).

Figure 2 illustrates a modification of Figure 1 wherein the core layer, herein core layer 14' is fabricated from a wood sheet, such as plywood fabricated from inferior laminated wood sheets. The plywood core layer 14' is herein shown as being glued to the base layer 18 fabricated from an OSB board as above described. Therefore, the core layer 14' is sandwiched between the top wood layer 11 and the OSB base layer 18 and the engineered wood sheet is stabilized by the OSB base layer as above described. The base wood layer 18 as shown has a thickness which is substantially equal to the thickness of the core layer, but the thickness ratio variations are described herein below.

It is desirable that these engineered wood floor boards be fabricated as thin as possible and preferably have a thickness in the range of between 10 to 25 mm. It is also preferable that the base OSB layer has an internal bond strength of at least 50 to 60 p.s.i. to resist to displacement and deformation of the rectangular wood slats 15 usually caused by expansion and retraction of the wood slats. Also preferable is that the OSB layer is comprised of at least two, herein three wood strand layers, oriented along transverse axis to one another. Because the floor board can be fabricated with a thickness of 10 mm as opposed to 25 mm, it is easier to install with nails or brads, glue or floating with glue in the grooves only.

The OSB base layer 18, which is herein described, is formed of a top layer 19, an intermediate layer 20, and a bottom layer 21 which have layer thicknesses which provide excellent planar stability of the base layer. For example, the thickness ratios of the base layers may comprise ratios of 30% top layer, 40% intermediate layer and 30% bottom layer. Alternatively, the thickness ratios may comprise a top layer of 40%, an intermediate layer of 20% and a bottom layer of 40%. Still further, the thickness ratios may comprise a top layer of 20%, an intermediate layer of 60% and a bottom layer of 20%. All of these ratios provide excellent planar stability of the OSB base layer 18 suitable for the fabrication of the engineered floor board 10 of the present invention. The OSB base layer 18 within the above described parameters provides excellent counter balance to the hard wood top layer 11 and therefore a wood floor board which is very stable transversely and longitudinally and less susceptible to longitudinal distortion (banana effect).

The engineered floor board 10 of the present invention is composed of the combination of the following layer thicknesses. The top layer is preferably in the range of 2 to 6 mm, the core layer in the range of 4 to 12 mm and the base wood layer in the range of 6 to 12 mm. Important to note that this thin base wood layer provides at least two, herein three layers of differently oriented strand fibers and such thin sheet root being realizable in three distinct sheets glued together.

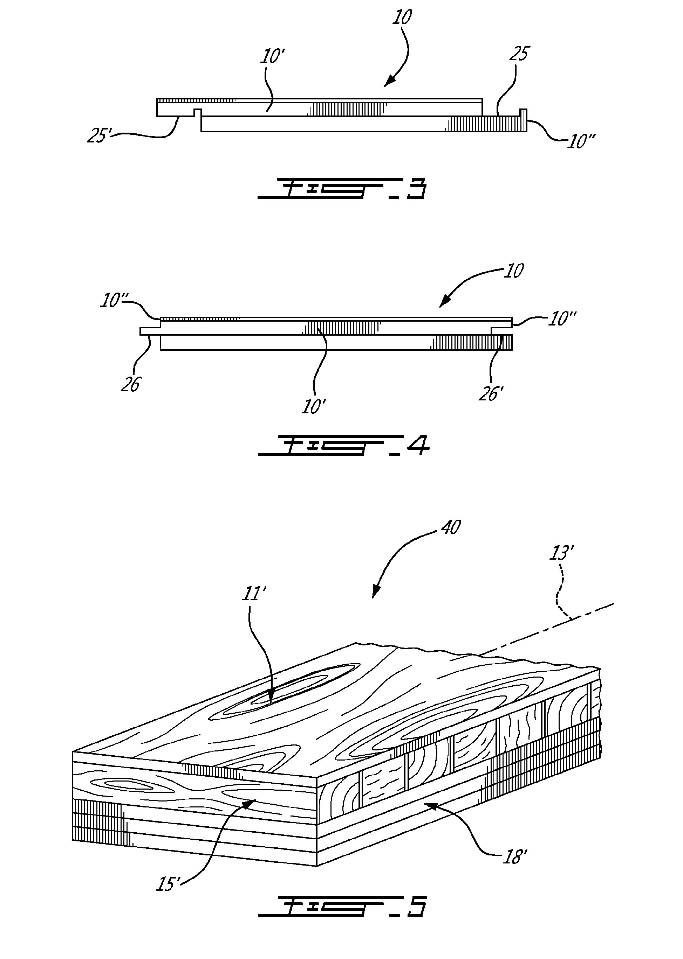

As illustrated in Figures 3 and 4 the engineered floor boards are also fabricated with interconnecting joint profiles which are routed on all edges of the board, namely the opposed end edges 10' and side edges 10" with interconnecting profile such as the lap coupling edge profiles 25 and 25' illustrated in Figure 3 or tongue and groove profiles 26 and 26' illustrated in Figure 4. Such are wellknown in the art of fabricating engineered floor boards.

Figure 5 illustrates a fragmented section of a wood panel 40 assembled for the fabrication of the engineered floor board 10 illustrated in Fig. 1. The panel 40 is formed by a sheet 15' of wood slats to which is bonded on a top surface thereof a sheet 11' of quality wood material. A sheet of OSB 18' is bonded to the bottom surface of the sheet 15' of wood slats. The orientation of the sheets is as above described with reference to Figure 1. Floor boards 10 are then cut through the wood panel along its longitudinal axis 13'.

It is pointed out that the OSB base layer provides two or more layers of differently oriented strand layers in a single board and thereby providing a multi-layer engineered floor board in a single manufacturing lamination step. By applying glue on opposed surfaces of the core layer, the top and bottom layers can be press secured thereto in a single lamination step with pressure applied across the assembly. If the base was formed from two or more sheets of boards this would not be possible in a single step, it would also be more costly. Further, this assembly can be effected along existing engineered board manufacturing assembly lines.

It is within the ambit of the present invention to cover any obvious modifications of the examples described herein provided such modifications fall within the scope of the appended claims.

## Claims

1. An engineered floor board comprising a thin top wood layer having a longitudinal axis, said top wood layer being fabricated from a quality wood material, said top wood layer being glued to a core layer wood product having a flexion strength axis disposed transversely to said longitudinal axis of said top wood layer, said core layer resisting to distortion or the floor board, and a base wood layer glued to a bottom surface of said core layer, said base wood layer being fabricated from a single sheet of oriented strand board (OSB) composed of wood strands generally oriented in at least two layers with a top one of said layers having said strands oriented along said longitudinal axis of said top wood layer and transverse to said flexion strength axis of said core layer to substantially prevent displacement and deformation of said core layer to prevent telegraphy in a top surface of said top wood layer caused by deformation in said core layer and further reducing longitudinal flexion of said floor board.

2. The engineered floor board as claimed in claim 1, wherein said core layer is constituted by a plurality of rectangular wood slats disposed in side-by-side relationship and extending transverse to said longitudinal axis of said top wood layer.

3. The engineered floor board as claimed in claim 1 or 2, wherein said base wood layer has a thickness which is substantially equal to the thickness of said core layer.

4. The engineered floor board as claimed in any one of claims 1 to 3, wherein said oriented strand board has two or more layers of wood strands, each layer having its strands oriented along a different axis to adjacent layers to provide planar stability of said oriented strand board, and wherein the layers of wood strands are preferably oriented substantially transverse to an adjacent layer.

5. The engineered floor board as claimed in any one of the previous claims, wherein the thickness of said engineered floor board is in the range of from 10 mm to 25 mm, and wherein said thickness of said engineered floor board is preferably composed of the combination of the following layer thickness: a top layer in the range of 2 to 6 mm, a core layer in the range of 4 to 12 mm, and a base wood layer in the range of 6 to 12 mm.

6. The engineered floor board as claimed in claim 2, wherein said rectangular wood slats are disposed in side-by-side spaced relationship thereby defining grooves therebetween.

7. The engineered floor board as claimed in any one of the previous claims, wherein said base wood layer has an internal bond strength of at least 50 to 60 p.s.i. to prevent said displacement and deformation of said core layer caused by expansion and retraction thereof and thereby resisting to longitudinal deformation, cupping and crowning of said engineered floor board to substantially reduce telegraphy.

8. The engineered floor board as claimed in claim 2, wherein said base wood layer is a three layer oriented strand board (OSB), each layer being composed of wood strands oriented in a generally common direction and glued together under compression, a top layer of said OSB having its strands oriented parallel to said longitudinal axis of said top wood layer, an intermediate layer of said OSB having its strands oriented transverse to said top layer thereof, and a bottom layer of said OSB having its strands oriented parallel to said top layer of said OSB.

9. The engineered floor board as claimed in claim 8, wherein said layers of said OSB have a thickness ratio composed of at least one of the following: 30% top layer, 40% intermediate layer and 30% bottom layer; 40% top layer, 20% intermediate layer and 40% bottom layer; or 20% top layer, 60% intermediate layer and 20% bottom layer.

10. The engineered floor board as claimed in any one of the previous claims, wherein said engineered floor board is formed with one of tongue and groove edge profile, and lap connecting edge profile.

11. A wood panel for the fabrication of engineered floor boards, said panel comprising a top sheet fabricated from a quality wood material, said top sheet being glued to a core wood sheet having a flexion strength axis disposed transversely to a longitudinal axis of said top sheet, said core wood sheet resists to distortion of said floor board, and a base wood sheet glued to a bottom surface of said core wood sheet, said base wood sheet being fabricated from oriented strand board (OSB) composed of wood strands generally oriented in at least two layers with a top one of said layers having said wood strands oriented along said longitudinal axis of said top sheet to substantially prevent displacement and deformation of said top sheet caused by deformation in said core sheet and further reducing longitudinal flexion of said wood panel.

12. A wood panel as claimed in claim 11 wherein said core wood sheet is constituted by a plurality of rectangular wood slats disposed in side-by-side relationship and extending transverse to said longitudinal axis of said top sheet.

13. A wood panel as claimed in claim 11 wherein said base wood sheet has a thickness which is substantially equal to the thickness of said core layer.

14. A wood panel as claimed in claim 11 wherein said oriented strand board has two or more layers of wood strands, each layer having its strands oriented along a different axis to adjacent layers to provide planar stability of said oriented strand board, and wherein the layers of wood strands are preferably orientied substantially transverse to an adjacent layer.

15. A wood panel as claimed in claim 11 wherein said base wood layer has an internal bond strength of at least 50 to 60 p.s.i. to prevent said displacement and deformation of said core layer caused by expansion and retraction thereof and thereby resisting to longitudinal deformation, cupping and crowning of said engineered floor board.
